# EUROPEAN PATENT SPECIFICATION

(11) **EP 2 625 405 B1**
(45) Date of publication and mention of the grant of the patent: **20.01.2016**
(21) Application number: 11763740.5
(22) Date of filing: 30.09.2011
(51) Int. Cl.: F01K 17/04, F02C 6/18, F01K 23/10

(54) **COMBINED CYCLE POWER PLANT WITH CO2 CAPTURE AND METHOD TO OPERATE IT**
KOMBIKRAFTWERK MIT EINFANGEN VON CO2 UND VERFAHREN ZUM BETRIEB DERSELBEN
USINE A CYCLE COMBINÉ ET METHODE POUR SA MISE EN OEUVRE

(30) Priority: 05.10.2010 EP 10186603
(43) Date of publication of application: 14.08.2013
(73) Proprietor: ALSTOM Technology Ltd, 5400 Baden (CH)
(72) Inventor: LI, Hongtao, CH-5000 Aarau (CH); DROUX, François, CH-5452 Oberrohrdorf (CH); RUCHTI, Christoph, CH-8610 Uster (CH); REYSER, Karl, 79790 Kuessaberg (DE)
(74) Representative: General Electric Technology GmbH
(86) International application number: PCT/EP2011/067179
(87) International publication number: WO 2012/045689

(56) References cited:
- WO-A1-00/48709
- WO-A1-2010/084119
- GB-A- 2 082 085

## Description

### Technical Field

The present invention pertains to a combined cycle power plant for the generation of electrical power comprising a gas turbine, a steam turbine, a heat recovery steam generator, and a plant integrated in the power plant for the capture and compression of carbon dioxide in the flue gases of the gas turbine. It furthermore pertains to a method of operating the power plant.

### Background Art

Combined cycle power plants with carbon dioxide (CO2) capture are well known in the literature and have been realized in first pilot power plants, for example in the USA and Sweden.

Known concepts for such power plant with carbon capture plants include a combined cycle power plant with a gas and steam turbine and a heat recovery steam generator (HRSG) designed to generate steam using the heat from the gas turbine flue gases. The flue gases exhausted by such HRSGs typically contain CO2 only up to about 4% of volume flow. CO2 capture plants have been proposed that capture the CO2 by means of an absorption process, for example using an absorption solution such as monoethanolamine. Following the CO2 absorption, the absorber solution is reheated in order to release the CO2 in pure gaseous form. The released CO2 gas is then compressed and cooled to allow storage.

Most importantly, the operation of a CO2 capture facility in connection with a fossil fuel fired power plant results in a considerable drop of the overall efficiency of the plant due to the heat consumption, typically in the form of extracted steam, and auxiliary power required to operate the CO2 capture plant. Efforts directed to lower this efficiency drawback are discussed For example in O. Bolland and S. Saether, "New concepts for natural gas fired power plants which simplify the recovery of carbon dioxide", Energy Conversion Management, Vol. 33, No. 5-8, pp. 467-475, 1992. Based on the direct relation between the efficiency of the CO2 absorption process and the concentration of the CO2 in the flue gases, various methods of increasing the CO2 concentration in the flue gases are proposed. For example, a recirculation of the flue gas back to the inlet of the gas turbine compressor can result in a doubling of the concentration of the flue gas led to the CO2 capture plant and a consequential increase of the CO2 capture plant efficiency.

It is also known that the concentration of oxygen in the flue gas affects the operation of the CO2 capture plant as oxygen may cause degradation of the absorbing solution, which can result in an increase in CO2 capture plant operation and maintenance costs.

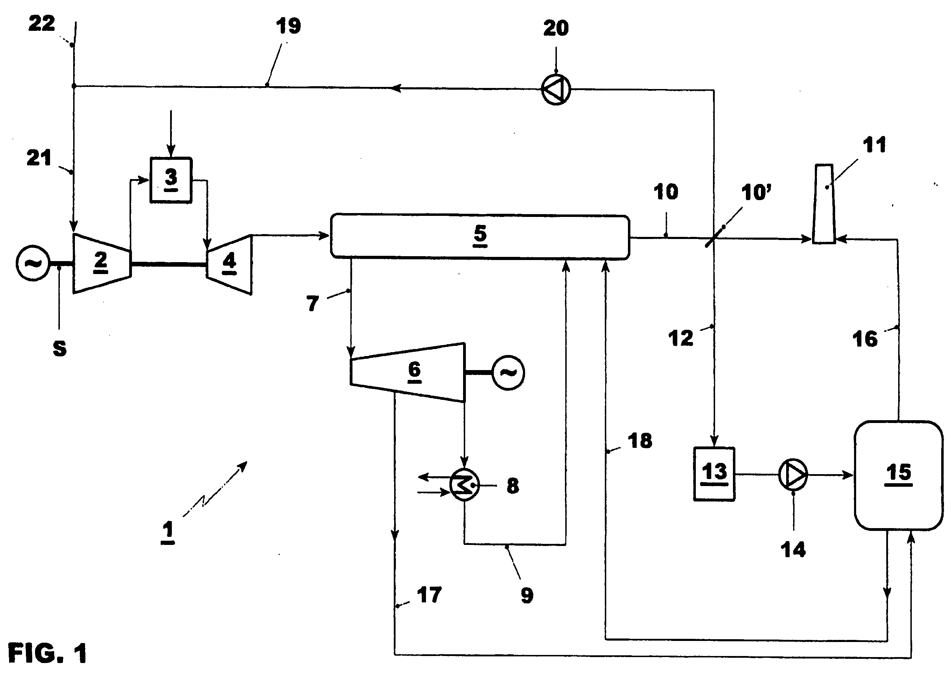

A typical combined cycle power plant 1 according to the prior art as illustrated in the schematic of figure 1 comprises a gas and steam turbine and a CO2 capture plant for the processing of all the flues gases resulting from the combustion of fossil fuels for the gas turbine. It comprises a compressor 2 and gas turbine 4 arranged on a shaft S driving a generator, a combustion chamber 3 generating hot gases to drive the gas turbine 4, and a heat recovery steam generator 5, from hereon called HRSG, which generates live steam that is directed via a line 7 to drive a steam turbine 6. A condenser 8 condenses the steam expanded in the turbine 6, and condensate/feed water is returned to the HRSG 5 via line 9. The flue gases exiting from the HRSG 5 are directed via a line 10 to a stack 11. A damper 10' arranged in the flue gas line 10 directs some of the flue gases to a line 12 leading it to a flue gas cooler 13. A blower 14 forces the cooled flue gases to a CO2 capture plant 15, where for example the CO2 is at first absorbed by a lean absorption solution. The absorption solution, enriched by the absorbed CO2 is then regenerated by heating, where pure CO2 gas is released from the solution. The released CO2 is subsequently processed for further use, transport, or storage. The remaining gases that are free of CO2 are directed to the stack 11 via line 16.

The CO2 capture plant 15 is supplied with steam extracted from the steam turbine 6 via line 17 in order to regenerate the CO2-rich absorption solution. Resulting condensate is directed via line 18 back to the water steam cycle of the steam power plant, for example to the HRSG 5 via the feedwater tank. Part of the flue gases from the exhaust from the HRSG 5 can be recirculated via line 19 and blower 20 back to the inlet of the gas turbine compressor, whereby the recirculated flue gases are mixed with fresh ambient air in line 22. A power plant with such flue gas recirculation as shown in figure 1 is arranged for the processing of all the flue gases in the CO2 capture plant for separation of the CO2.

The WO2010/084119 A1 discloses a gas turbine combined cycle power plant with exhaust-gas recirculation and CO2 separation. In the gas turbine the hot-gas flow is split into a recirculation flow and an exhaust-gas flow before the final turbine stage in the turbine.

### Summary of Invention

It is an object of the present invention to propose a combined cycle power plant for the generation of electrical power with a CO2 capture plant having an increased CO2 capture efficiency compared to power plants of this type of the prior art.
It is a further object of the present invention to propose a method to operate such power plant allowing decreased operating costs.

A combined cycle power plant for the generation of electrical power comprises at least one gas turbine, a first or main heat recovery steam generator HRSG for generating steam by means of gases exhausted by the gas turbine and directed to the HRSG via an exhaust gas line, and furthermore at least one steam turbine driven by steam generated in the HRSG. The power plant is furthermore operationally connected with a CO2 capture plant arranged and configured for the absorption of CO2 contained in the flue gas by means of a lean absorption solution, where after absorbing CO2 gas the CO2-enriched absorption solution may be regenerated by reheating in order to release CO2 in pure gaseous form.

According to the invention, the power plant comprises a second heat recovery steam generator (HRSG) or a boiler and a line for gas turbine exhaust gas leading from the combined cycle power plant to the second HRSG or the boiler. The second HRSG or boiler is configured and arranged to receive the exhaust gas from the gas turbine and to transfer the heat of the exhaust gas to feedwater and/or steam and to generate steam for the operation of a steam turbine or the CO2 capture plant or both. The combined cycle power plant comprises in particular a damper or flow divider in the exhaust gas line, which is arranged to divide the exhaust gas flow into a first and second partial exhaust gas flow in a first and second gas line respectively, where the first gas line for the first partial flow leads to a stack and the second gas line for the second partial flow leads to the second HRSG or the boiler.

The power plant according to the invention with a damper in the exhaust gas flow allows the direction of the first partial exhaust gas flow to the stack in two different ways, either directly to the stack or indirectly via the first HRSG, depending on the placements of the damper in the exhaust line, namely after or prior to the first HRSG.

In a first embodiment of the invention as set out as the first option in claim 1, the damper or flow divider is arranged in the gas turbine exhaust that is in the line leading exhaust gas from the gas turbine to the first HRSG. It directs the second partial exhaust gas flow to the second HRSG and the first partial exhaust gas flow to the first HRSG. In this arrangement exhaust gas of high temperatures (above 500°C, for example ca. 600°C) may be led to the second HRSG.

In a second embodiment of the invention, as set out as the second option in claim 1, the damper or flow divider is arranged in the HRSG exhaust, that is in the exhaust gas line leading away from the first HRSG. This directs a second partial exhaust gas to the second HRSG and a first partial exhaust gas flow to the stack. In this arrangement exhaust gas of lower temperatures (for example from 80 to 100°C) may be led into the second HRSG.

In an exemplary embodiment of the invention, the power plant further comprises a line directing the exhaust gas from the second HRSG or boiler to the CO2 capture plant.

The power plant according to the invention allows a full capture of the CO2 contained in the exhaust gases and resulting from the combustion of a fossil fuel for the gas turbine. In particular, the invention allows also a partial capture of the CO2 in the exhaust gases. Additionally, it allows an increase in the CO2 concentration of the exhaust gases intended for CO2 capture by means of the supplementary firing within the second HRSG.

In a further exemplary embodiment, the second HRSG or boiler comprises in particular a supplementary firing assembly, which augments the heat available in the HRSG and reduces the oxygen content of the exhaust gas passing through it.

The supplementary firing also effects a reduction of the oxygen concentration of the flue gases, which in turn slows down the rate of degradation of the CO2 absorption solution in the CO2 capture plant. The operating lifetime of the solution is thereby increased, and maintenance costs of the CO2 capture plant can be lowered.
Furthermore, it allows the use of the heat in the exhaust gases by transfer of this heat to flow media, for example the rich absorption solution of the CO2 capture plant, thereby supporting the regeneration of the solution. Extractions of steam from the steam turbine of the combined cycle plant to support the CO2 capture plant are thereby avoided or can at least be reduced such that valuable steam can further be used to drive the turbine, and steam turbine efficiency can be upheld.

A partial CO2 capture is advantageous when it sufficiently reduces the power plant's CO2 emission within the limitations as required by authorities and regulations. It can enable improved performance and profitability compared to power plants with full CO2 capture, where the flue gases are treated for separation of the CO2 at a rate of up to 90% capture.

The second HRSG or boiler with supplementary firing allows on one hand a reduction of the residue oxygen content in the flue gases passing through it and thereby a CO2 absorption process with a lower 02 content such that the CO2 absorption solution is loaded with less oxygen. This results in a reduced rate of degradation of the absorption fluid due to 02 and thereby in a longer operational lifetime of the absorption solution. Furthermore, the combustion due to the supplementary firing produces exhaust gases from the second HRSG or boiler having an increased CO2 volume concentration of about 6%. This allows an increased efficiency of the CO2 capture plant in that the requirement of steam and energy consumption per flue gas mass flow is reduced.

The operation of the second HRSG with the gas turbine exhaust gases allows a more flexible operation of the CO2 capture plant and of the steam turbine in that heat can be provided by two different HRSGs for the reboiling of the CO2 rich absorption solution and/or the steam extraction, for example low-pressure steam from a cross-over pipe from an intermediate-pressure turbine to a low-pressure turbine, or cold reheat steam, or live steam from a steam turbine.

A further advantage of the power plant according to the invention is that the flexibility in part load operation of the power plant can be greatly increased. At power plant part load operation, the exhaust gas flow diverted to the second HRSG or boiler can be kept constant such that the CO2 capture plant treating this exhaust gas is also run at a constant load. The flow to the second HRSG could be also reduced at part load if less CO2 needs to be captured.

In an exemplary embodiment of the invention, the damper or flow divider in the exhaust gas line is arranged for division of the flows such that the second flow to the second HRSG or boiler to the exhaust gas flow is in the range of 10% up to 60% of the total exhaust gas flow exiting from the gas turbine. This may be the case at full-load operation as well as part-load operation of the power plant.

In place of the second HRSG, the power plant may comprise a boiler, where this boiler can be a gas-fired boiler, a coal fired boiler, or an oil-fired boiler.

In the embodiment of the power plant comprising a boiler instead of a second HRSG, a nearly stoechiometric combustion can be achieved in the boiler, such that the resulting CO2 concentration in the exhaust gases from this boiler reaches a level of 6-8%. This facilitates greater CO2 capture plant efficiency due to a reduction of the steam needed to operate it.

In both cases, a power plant according to the invention with a second HRSG or a boiler enables an increased part load operation flexibility as well as increased part load power plant performance while the requirements on CO2 capture are still fulfilled.

In a further exemplary embodiment of the invention, the power plant comprises additionally a backpressure steam turbine configured and arranged to receive steam from the second HRSG or a boiler, where the steam turbine drives a generator. A further low-pressure steam turbine may be arranged on the same shaft as the backpressure steam turbine and the generator by means of an automatic clutch, for example a synchro-self-shifting (SSS) clutch. Steam expanded in the back pressure steam turbine can be led to both the low-pressure steam turbine for the generation of electricity and / or to the CO2 capture plant reboiler for rich absorption solution regeneration or as regulation steam combined with HRSG tail-end rich absorption solution heat exchanger.

A further embodiment of the invention comprises a CO2 compressor arranged on a single shaft together with a steam turbine driving the compressor. The steam turbine is operated by live steam generated in the second HRSG.

In all the disclosed embodiments, the power plants may include means to introduce augmenting fresh ambient air to the second HRSG or boiler as needed in order to stabilize the supplementary firing within the HRSG or the combustion within the gas, oil, or coal fired boiler.

Further specific embodiments of the power plant are disclosed in connection with the figures.

A method according to the invention to operate a combined cycle power plant comprising a gas turbine generating a exhaust gas flow is set out in claim 10.

A particular method according to the invention comprises
- diverting the second portion of the exhaust gas flow immediately following its exit from the gas turbine and directing it to the second HRSG or boiler.

A further method according to the invention comprises
- diverting the second portion of the exhaust gas flow after its passing through the first HRSG and its exiting from the first HRSG and directing it to the second HRSG.

In a further particular method of the invention, the residue oxygen content in the exhaust gas is reduced by means of supplementary firing in the second HRSG. As mentioned, a reduced oxygen content in the exhaust gas increases the operating lifetime of a CO2 absorption solution.

A particular use of the steam generated in the second HRSG or boiler include the reheating a CO2 rich absorption solution in the CO2 capture plant. Depending on the operation load of the power plant and/or CO2 capture plant, this can allow for greater flexibility and performance increase due to a decrease use of extraction steam from the main combined cycle steam turbine.

For yet greater flexibility in the partial CO2 capture, the exhaust gas flow exiting from the second HRSG or boiler is directed to the CO2 capture plant as well, however can also by means of damper in the exhaust line from the second HRSG be diverted to a stack.

A further particular method according to the invention further comprises one or more of the following:
- directing steam from the steam turbine of the combined cycle power plant to the second HRSG or boiler and directing reheated steam back to this steam turbine,
- directing steam generated in the second HRSG or boiler as live steam to the steam turbine of the combined cycle power plant
- directing steam from the second HRSG to the CO2 capture plant for use in the reheating and regeneration of a CO2-rich absorption solution,
- directing condensate from the CO2 capture plant to the second HRSG or boiler for the generation of steam.

The supplementary firing allows the combustion of residual oxygen contained in the flue gases to maintain a constant CO2 concentration in the flue gas leaving the second HRSG or boiler. A minimum oxygen concentration can remain in the flue gases to allow complete combustion, typically with flue gases, which contain practically no residual unburned hydrocarbons and practically no CO. The constant CO2 concentration in the flue gas leaving the second HRSG or boiler assure good operating conditions for the subsequent CO2 capture plant, thus enhancing the overall plant efficiency. Due to the subsequent firing the flue gases directed to the second HRSG or boiler lead to a higher steam and power production than the flue gases directed to the first HRSG or boiler. As a consequence by controlling the ratio of flue gas mass flow directed to first HRSG or boiler to the flue gas mass flow directed to the second HRSG or boiler the overall power output of the plant can be controlled.

### Brief Description of the Drawings

Figure 1 shows a combined cycle power plant with a CO2 capture plant according to the prior art.

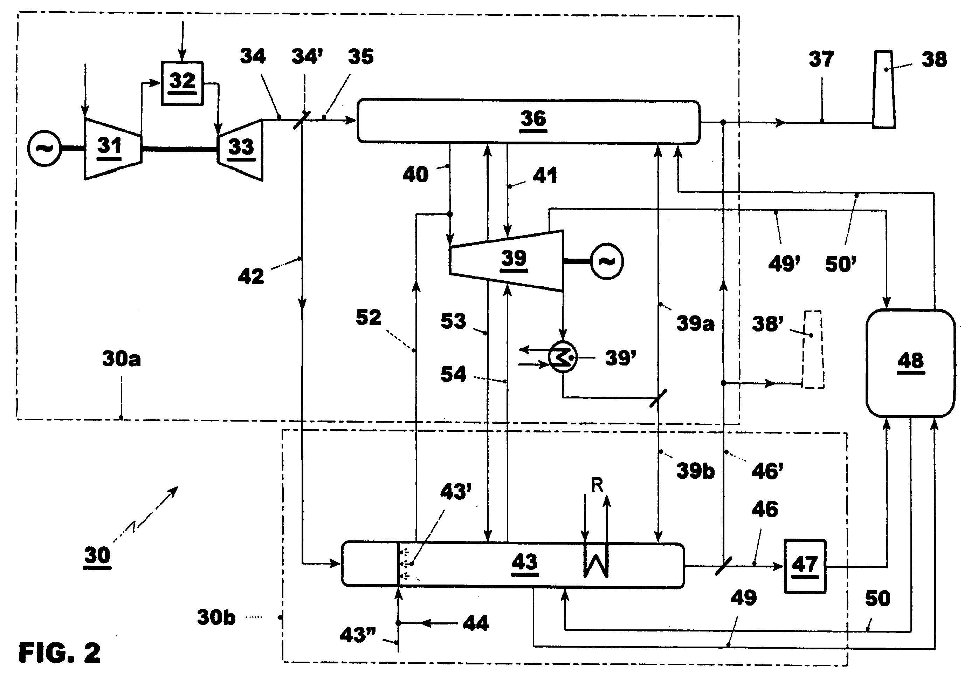

Figure 2 shows an embodiment of a combined cycle power plant with a CO2 capture plant according to the invention with a second HRSG or boiler and a damper for diverting exhaust gas flow to the second HRSG or boiler and a damper to divert part of the gas turbine exhaust gas to the second HRSG or boiler.

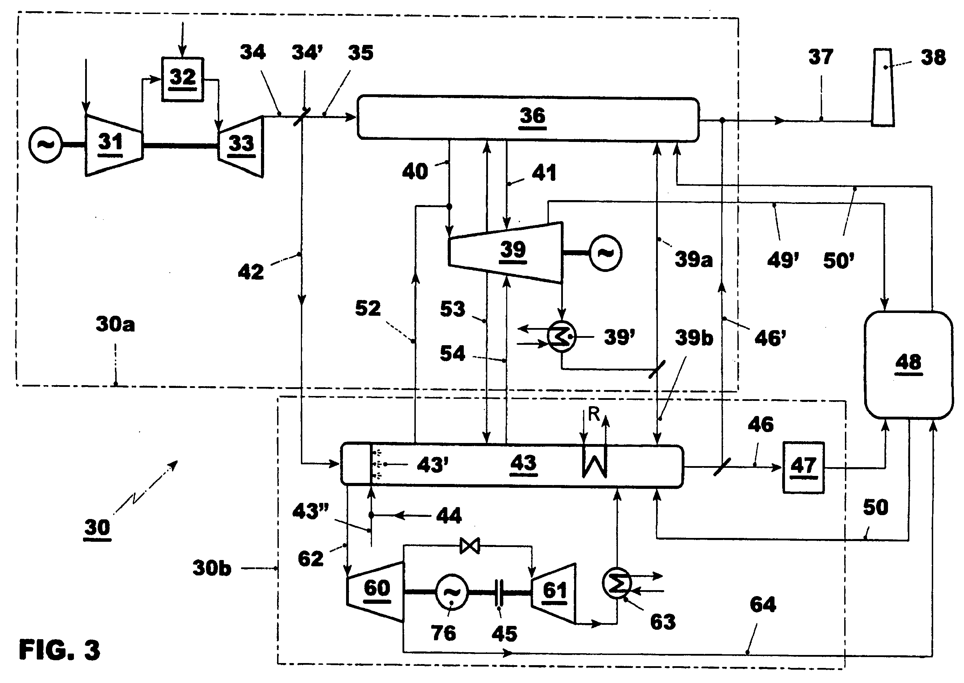

Figure 3 shows a further embodiment of the combined cycle power plant with CO2 capture plant according to the invention with a second HRSG or boiler and a single-shaft arrangement with a high- or intermediate-pressure steam turbine, a generator and a low-pressure steam turbine.

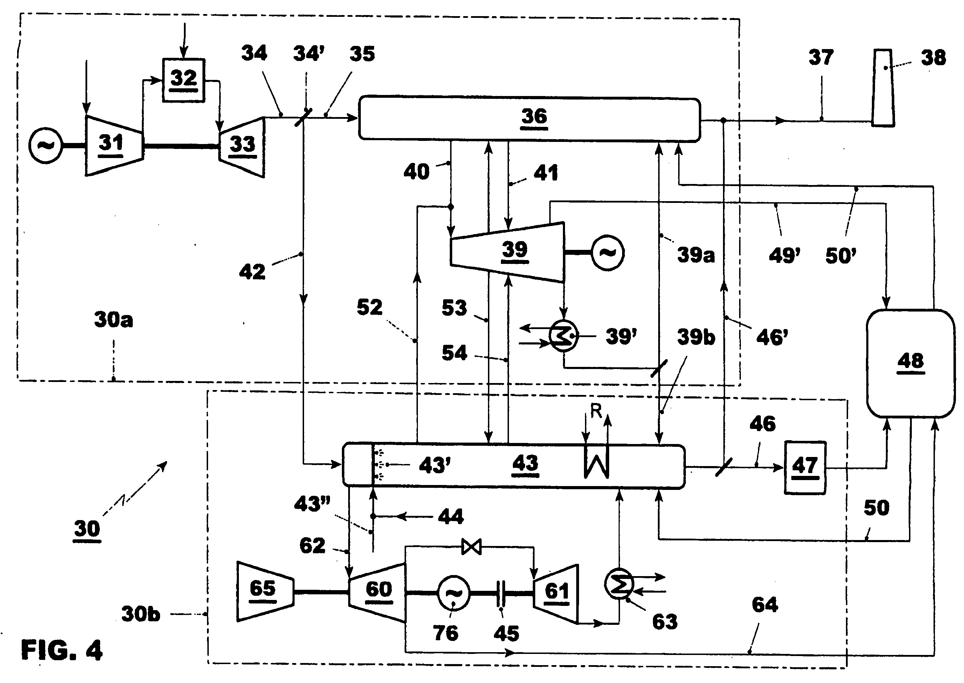

Figure 4 shows a further embodiment of the combined cycle power plant with a CO2 capture plant according to the invention with a second HRSG or boiler and a single-shaft arrangement of a high- or intermediate-pressure steam turbine, a generator, a low-pressure steam turbine, and a steam turbine driven CO2 compressor.

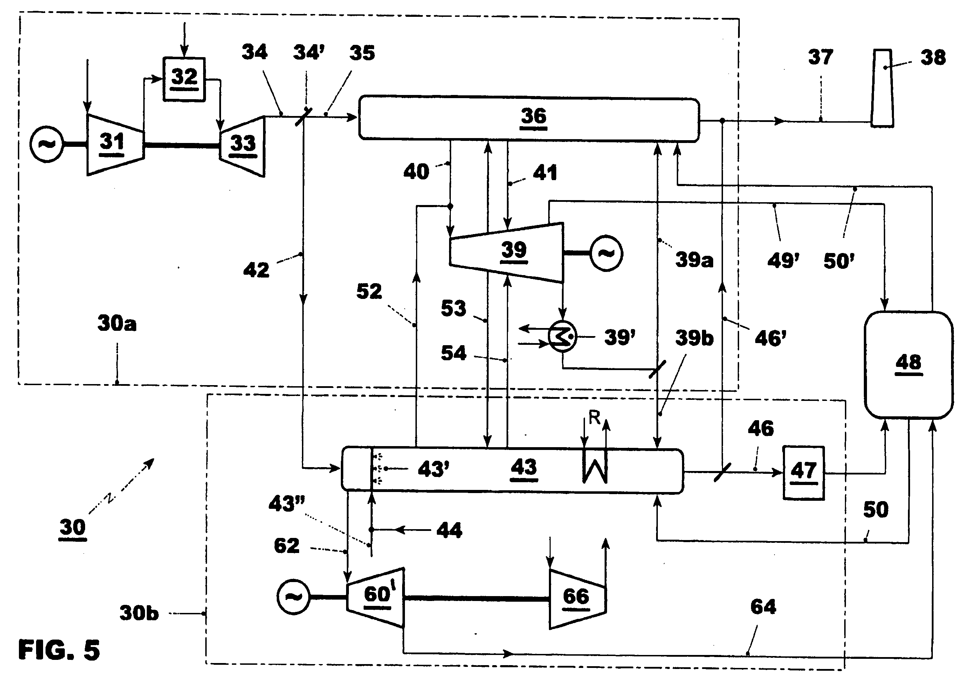

Figure 5 shows a further embodiment of the combined cycle power plant with a CO2 capture plant according to the invention with a second HRSG or boiler and an arrangement of a backpressure steam turbine and a CO2 compressor and a further variant of providing steam to the reboiler within the CO2 capture plant.

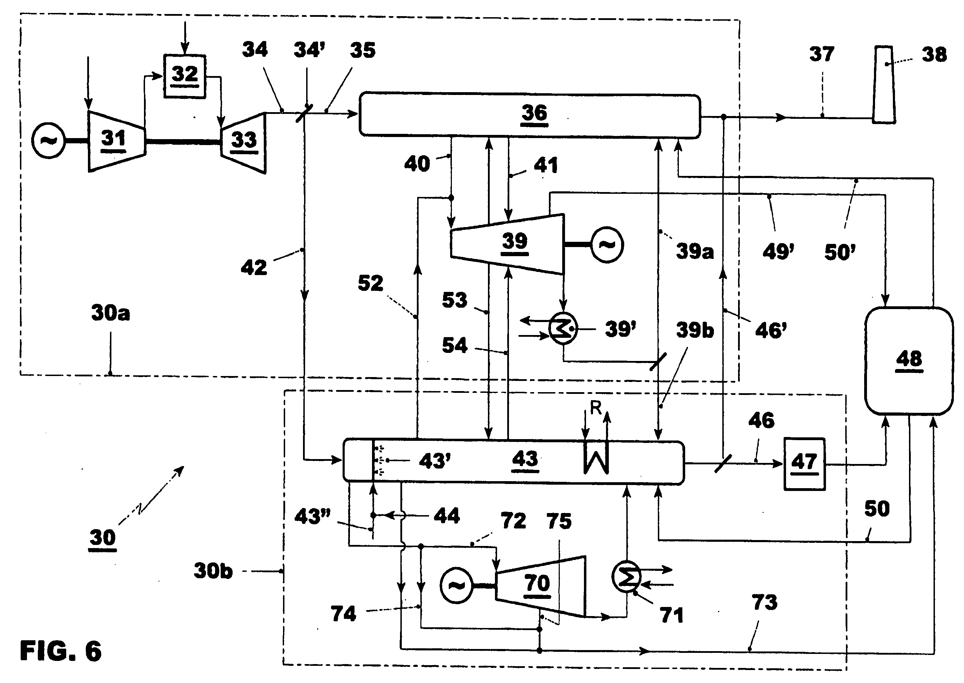

Figure 6 shows a further embodiment of the combined cycle power plant with a CO2 capture plant according to the invention with a second HRSG or boiler and an arrangement for providing steam to the CO2 capture plant from the HRSG or from a steam turbine driven by steam from the HRSG.(??)

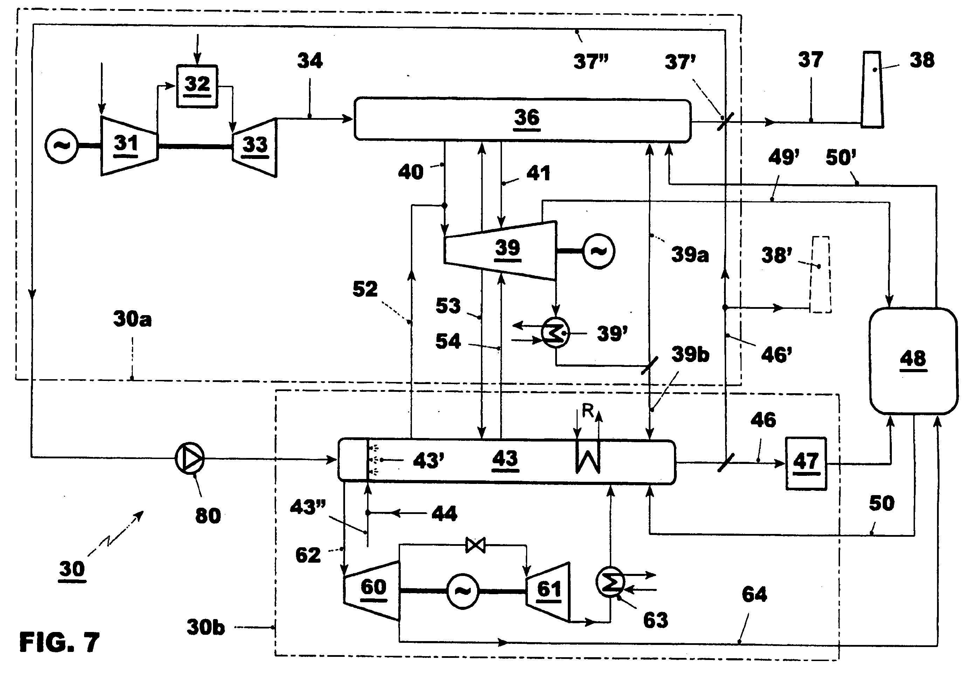

Figure 7 shows a further embodiment of the combined cycle power plant with a CO2 capture plant according to the invention with a second HRSG or boiler and a damper arranged after the first HRSG to direct flue gas to the second HRSG. It further comprises a single-shaft arrangement with a high- or intermediate-pressure steam turbine, a generator, and a low-pressure steam turbine.

Same reference numerals in different figures refer to same elements in same configuration.

### Best Modes for Carrying out the Invention

A power plant 30 for the generation of electricity according to the invention as shown in figures 2-7 comprises essentially a first and second unit 30a and 30b, where unit 30a comprises a combined cycle power plant with a gas turbine compressor 31, combustion chamber 32, and gas turbine 33 driving a generator. An exhaust gas line 34, 35 directs gas exhausted by the gas turbine to a first HRSG 36, where it is used for steam generation and subsequently led through a flue gas line 37 directing the exhaust gases to a stack 38.
Steam generated in the first HRSG is led via a live steam line 40 to a steam turbine 39, which in turn drives a further generator. The steam exhausted by steam turbine 39 is led into a condenser 39' and resulting condensate is directed into the HRSG 36 via line 39a for the generation of steam, thereby completing the water steam cycle.

Unit 30b of the power plant 30 mainly comprises a second HRSG 43, which is operated with hot exhaust gases from unit 30a branched off from exhaust gas line 34 by means of a damper or flow divider 34'. The exhaust gases are used for heat transfer to various fluids in various pressure and temperature ranges and finally directed first to an exhaust gas cooler 47 via line 46 and then to the CO2 capture plant 48. A further damper in line 46 allows a further division of the exhaust gas flow, a portion of which is directed via line 46' to a stack 38' or to line 37 and the stack 38.

The first damper 34' in line 34 is arranged to divert from 10 to 60% of the exhaust gas flow exiting from the gas turbine flowing in line 34 to the second partial flow line 42 and the second HRSG 43. A supplementary firing assembly 43' supplied with fuel via line 43" is operated within the HRSG 43 in order to reduce as much as possible the oxygen content in the flue gases and to be treated in the CO2 capture plant by means of the CO2 absorption solution. In order to stabilize the combustion within the second HRSG and to augment the power, the supplementary firing assembly can be supplied by additional air via a line 44 directed into the supplementary firing fuel line 43".

The two HRSGs in this power plant are used for generating steam from condensate from the steam turbine condenser, as well as for heating or reheating steam from various sources.
The first and second HRSGs 36, 43 are provided with condensate from the steam turbine condenser 39' via lines 39a and 39b respectively leading to their low-pressure, low temperature portions. Further condensate from the CO2 capture plant resulting from steam condensing in the CO2 absorption solution reboiler within the CO2 capture plant and having a temperature higher than that of the condenser 39 is directed via lines 50 and 50' to the first and second HRSGs 43 and 36, respectively.

Both first and second HRSGs 36 and 43 generate live steam that is directed to steam turbine 39 via lines 52 and 40, respectively. They are also configured to generate reheat steam that is directed to same steam turbine 39 via lines 54 and 41, respectively. They furthermore are configured to generate steam for direct or indirect use in the CO2 capture plant such as the regeneration of the CO2 absorption solution.
The second HRSG 43 is also configured for the preheating of a CO2-rich absorption solution prior to a regenerator reboiler of the CO2 capture plant so that the required steam in the reboiler can be minimized to a level sufficient for regulating the required temperature. This configuration will both increase the thermodynamic efficiency of the regeneration process and reduce the investment cost.

The CO2 capture plant is operated by and provided with steam used for the regeneration of the CO2 absorption solution, where this steam is extracted from the combined cycle steam turbine 39 via line 49' together with steam from the second HRSG 43 provided via line 49. This configuration allows the steam extraction from the steam turbine 49' to be reduced compared to a power plant with a CO2 capture of the prior art thereby improving the steam turbine performance.

Optionally, an additional steam line leading from away the second HRSG and designated with R can provide steam to the CO2 capture plant reboiler, to further support its operation.

Figure 3 shows a further power plant according to the invention comprising all elements as shown and discussed in connection with unit 30a in figure 2. Figure 3 shows a further exemplary embodiment of the invention, specifically within Unit 30b. It comprises the second HRSG 43 with supplementary firing assembly 43' with fuel and air lines 43" and 44. Differing from the embodiment of figure 3, it additionally comprises a single-shaft arrangement including a high- or intermediate-pressure steam turbine 60, a generator 76, and a low-pressure steam turbine 61. The low-pressure steam turbine is connected to the generator by means of an automatic clutch 45, for example an automatic clutch, for example a synchro-self-shifting (SSS) clutch. Live steam is provided to the steam turbine 60 by the second HRSG 43 via line 62. A condenser 63 is provided to condense the steam expanded in turbine 61. Its condensate is directed to the low-pressure portion of HRSG 43.
The steam expanded in the high- or intermediate-pressure steam turbine 60 is for one part is directed via line 64 to the CO2 capture plant for similar uses as the steam used from line 49 in figure 3. In the case that not all the exhaust steam from the high- or intermediate-pressure steam turbine 60 needs to be used by the CO2 capture plant, the remaining part of steam flow can be directed to the low-pressure steam turbine 61 for power generation. The remaining steam can also be used to warm up the low-pressure steam turbine 61 so that it can be quickly started up for generating power by means of the generator 76 and the automatic clutch 45. This can be particularly used in the case when the CO2 capture plant is running under part load and a reduced amount of steam and heat is needed for its operation or when the CO2 capture plant is tripped, and there is an excess of heat and steam available.
It can further more be used for power augmentation or for grid frequency response.

Figure 4 shows a power plant having the same elements in unit 30a and unit 30b as shown and discussed in connection with figure 3 including the second HRSG 43 with supplementary firing and a further embodiment of the single-shaft arrangement operationally connected with the second HRSG 43. Additionally, this embodiment comprises a single-shaft arrangement having a CO2 compressor 65 that is driven, in addition to the generator 76, by the intermediate- or high-pressure turbine 60 and low-pressure steam turbine 61 and by means of the clutch 45.
The second HRSG 43 and single-shaft arrangement thereby further supports the CO2 capture process, specifically the compression of the captured CO2 for transport and/or storage.

Figure 5 shows a further embodiment of the invention comprising a variant of unit 30b, Specifically it comprises, in addition to the second HRSG with supplementary firing, a single-shaft arrangement having a backpressure steam turbine 60', which is provided with live steam from the HRSG 43 and drives a CO2 compressor 66 and a generator.

Figure 6 shows an embodiment of the power plant with unit 30a as discussed in the previous figures 2-5 and a further embodiment of unit 30b comprising the second HRSG 43. Unit 30b specifically comprises a steam turbine 70 driven by means of live steam provided by the second HRSG 43 via line 72. Steam expanded in the turbine 70 is condensed in a condenser 71, where the resulting condensate is led back to the HRSG 43. Lines 73-75 are provided to direct live steam and steam extracted from the turbine 70 or both to the CO2 capture plant to support its operation. This steam can also be used to drive a further steam turbine in connection with the CO2 capture plant arranged to drive a CO2 compressor.

Figure 7 shows a further embodiment of the invention comprising a combined cycle power plant with units 30a and 30b, where unit 30a comprises a combined cycle power plant with a gas turbine 31-33 driving a generator, gas turbine exhaust line 34, a first HRSG 36, and a flue gas line 37 leading to a stack 38. It furthermore comprises a steam turbine 39 driven by steam generated in the first HRSG 36, the steam turbine 39 driving a further generator. The power plant also comprises a CO2 capture plant 48 and second HRSG 43 for the generation of steam to support the operation of the CO2 capture and/or further steam turbines 60 and 61.
In this embodiment, the gas turbine exhaust gas line 34 leads all the exhaust gas directly to the first HRSG 36, where the gas exhausted by this HRSG is directed into exhaust gas line 37. Prior to the stack 38, the exhaust gas line 37 comprises a damper or flow divider 37', which divides this lower temperature exhaust gas flow emanating from the first HRSG 36 into a first exhaust gas flow to line 37" and into a second exhaust gas flow remaining in line 37 and directed to the stack 38. Line 37" comprising a blower 80 directs the second exhaust gas flow to the second HRSG 43. Instead of using blower 80, the gas turbine backpressure may be increased.

Steam generated in the second HRSG 43, which contains the heat of the gas turbine exhaust gas flow in line 37" is provided to a high- or intermediate-pressure steam turbine 60 and a low-pressure steam turbine 61, which drive a generator 76. Again, as is the case in the embodiment of figure 3, an automatic clutch (not shown) is arranged on the shaft between generator and turbine 61. Live steam from the second HRSG 43 is provided to the steam turbine 60 via line 62. A condenser 63 condenses the steam expanded in steam turbine 62. Similar to the embodiment of figure 3, the steam expanded in the turbine 60 may be used for one part in turbine 61 and for another be directed via line 64 to the CO2 capture plant 48 to support the CO2 capture operation as well as the other uses described in connection with figure 3.

### Terms used in figures:

- 1: power plant
- 2: gas turbine compressor
- 3: combustion chamber
- 4: gas turbine
- 5: HRSG
- 6: Steam turbine
- 7: live steam line
- 8: steam condenser
- 9: condensate/feed water line
- 10: exhaust/flue gas line from first HRSG exit
- 10': damper for flue gas recirculation/flue gas treatment(CO2 capture)
- 11: stack
- 12: flue gas line
- 13: flue gas cooler
- 14: blower
- 15: CO2 capture plant
- 16: line for CO2 free gas from CO2 capture plant to stack
- 17: steam line to CO2 capture plant
- 18: condensate line back to water steam cycle
- 19: flue gas recirculation line
- 20: blower
- 21: line for air to compressor
- 22: ambient air line
- 30: power plant
- 30a: unit with combined cycle power plant
- 30b: unit with second HRSG
- 31: gas turbine compressor
- 32: combustion chamber
- 33: gas turbine
- 34, 35: gas turbine exhaust gas line
- 34': damper or flow divider
- 36: first HRSG
- 37: flue gas line from first HRSG to the stack
- 37': damper /flow divider
- 37": exhaust gas line to the second HRSG or boiler
- 38: stack
- 39: steam turbine
- 39': steam condenser
- 39a, 39b: condensate line
- 40: live steam line
- 41: steam line
- 42: line for exhaust gas partial flow to the second HRSG
- 43: second HRSG
- 43': supplementary firing assembly
- 43": fuel line for supplementary firing
- 44: air line
- 45: automatic clutch
- 46: exhaust gas line to CO2 capture plant
- 46': flue gas line to stack
- 47: gas cooler
- 48: CO2 capture plant
- 49, 49': steam line to CO2 capture plant
- 50: condensate line from CO2 capture plant to second HRSG
- 52: live steam line
- 53, 54: reheat steam line
- 60: high- or intermediate-pressure steam turbine
- 60': steam turbine
- 61: low-pressure steam turbine
- 62: live steam line
- 63: steam condenser
- 64: steam line to CO2 capture plant
- 65, 66: CO2 compressor
- 70: steam turbine
- 71: steam condenser
- 72: live steam to steam turbine
- 73, 74, 75: steam line to CO2 capture plant
- 76: generator
- 80: blower
- S: shaft
- R: regeneration boiler

## Claims

1. A combined cycle power plant (30) for the generation of electrical power comprising at least one gas turbine (31-33), a first or main heat recovery steam generator HRSG (36) for generating steam by means of gases exhausted by the gas turbine (33) and directed to the HRSG (36) via an exhaust gas line (34), and at least one steam turbine (39) driven by steam generated in the first HRSG (36), where the power plant is operationally connected with a CO2 capture plant (48) arranged and configured for the removal of CO2 contained in the gas turbine exhaust gas by means of an absorption solution, where the absorption solution may be reheated in order to release pure gaseous CO2, whereby
the power plant comprises a second heat recovery steam generator HRSG or a boiler (43) configured and arranged to receive gas turbine exhaust gas and to transfer the heat from the gas turbine exhaust gas to steam and/or feedwater, and the second HRSG or boiler (43) is configured and arranged to generate steam for at least one further steam turbine (60, 60', 70) or the CO2 capture plant (48) or both, **characterized in that** the combined cycle power plant (30) comprises a damper or flow divider (34') in a gas turbine exhaust gas line (34,) leading exhaust gas from the gas turbine (33) to the first HRSG (36) or comprises a damper or flow divider (37') in an exhaust gas line (37) leading away from the first HRSG (36), the damper or flow divider (34', 37') being arranged to divide an exhaust gas flow into a first and second partial exhaust gas flow, where the power plant (30) comprises lines (35, 37, 42, 37") to direct the first partial exhaust gas flow to the first HRSG (36) or to a slack (38) and the second partial exhaust gas flow to the second HRSG or boiler (43),
wherin the damper or flow divider (34', 37') is arranged to divert 10 to 60% of the exhaust gas flow reaching the flow divider or damper (34', 37') into the second exhaust gas flow (42, 37") and to the second HRSG or boiler (43).

2. A combined cycle power plant (30) according to claim 1
**characterized in that**
the damper or flow divider (34') is arranged in an exhaust gas line (34) leading from the gas turbine (33) to the first HRSG (36) and a line (36) is arranged to direct the first partial exhaust gas flow from the flow divider (34') to the first HRSG (36) and a further line (42) is arranged to direct the second partial exhaust gas flow from the flow divider (34') to the second HRSG or boiler (43).

3. A combined cycle power plant (30) according to claim 1
**characterized in that**
the damper or flow divider (37') is arranged in an exhaust gas line leading away from the first HRSG (36) and to the stack (38) and a line (37) is arranged to direct the first partial exhaust gas flow from the flow divider (37') to the stack (38) and a further line (37") is arranged to direct the second partial exhaust gas flow from the flow divider (37') to the second HRSG or boiler (43).

4. A combined cycle power plant (30) according to one of the foregoing claims
**characterized in that**
the power plant comprises at least one line (49) to direct steam generated in the second HRSG or boiler (43) to the CO2 capture plant (48).

5. A combined cycle power plant (30) according to one of the foregoing claims
**characterized in that**
the power plant comprises a line (62, 72) to direct steam generated in the second HRSG or boiler (43) to a further steam turbine (60, 60', 61, 70).

6. A combined cycle power plant (30) according to one of the foregoing claims
**characterized in that**
the power plant comprises a supplementary firing assembly (43').

7. A combined cycle power plant (30) according to one of the foregoing claims
**characterized in that**
the power plant further comprises a line (46) for gas exhausted by the second HRSG or boiler (43) leading to the CO2 capture plant (48).

8. A combined cycle power plant (30) according to one of the claim 5 to 7
**characterized in that**
the power plant (30) comprises a high- or intermediate pressure steam turbine (60, 60') driven by steam generated in the second HRSG or boiler (43) and a generator (76) arranged on a single shaft and **in that** the power plant (30) comprises a CO2 compressor (65, 66) arranged on the single shaft

9. A combined cycle power plant (30) according to claim 5,6, or 7
**characterized in that**
the power plant (30) comprises a steam turbine (70) arranged to receive steam from the second HRSG or boiler (43) and to drive a generator (76), and the power plant (30) further comprises lines (73-75) to direct steam from the second HRSG or boiler (43) or steam extracted from said steam turbine (70) or from both to the CO2 capture plant (48).

10. Method to operate combined cycle power plant (30) comprising a gas turbine (31-33), a first heat recovery steam generator HRSG (36), a steam turbine (39), end a CO2 capture plant (48) and a line (35) leading the exhaust gas from the gas turbine to the first heat recovery steam generator HRSG (36),
comprising
- directing a first portion of the exhaust gas flow from the gas turbine (33) through the line (35) leading exhaust gas from the gas turbine to the first heat recovery steam generator HRSG (36) to a stack (38),
- directing a second portion of an exhaust gas flow from the gas turbine (33) through the line (35) leading exhaust gas from the gas turbine (33) to the first heat recovery steam generator HRSG (36) to an additional second HRSG or a boiler (43).
- operating the second HRSG or boiler (43) to generate steam and directing this steam to the CO2 capture plant (48) or to a further steam turbine (60, 61, 60', 70) or both.

11. Method according to claim 10
**characterized by**
- diverting the second portion of the exhaust gas flow from the gas turbine (33) to the second HRSG (43) by means of a flow divider (34') arranged in the exhaust gas line after the gas turbine (33) and prior to the first HRSG (36).
or by
- diverting the second portion of the exhaust gas flow from the gas turbine (33) to the second HRSG (43) by means of flow divider (37') arranged in the exhaust gas line after the first HRSG (36).

12. Method according to one of the foregoing claims 10 to 11
**characterized by**
- directing at least a portion of the exhaust gas flow exiting from the second HRSG or boiler (43) to the CO2 capture plant (48).

13. Method according to one of the foregoing claims 10 to 12
**characterized by**
- using the steam generated in the second HRSG or boiler (43) to reheat a CO2 absorption solution in the CO2 capture plant (48).

14. Method according to one of the foregoing claims 10 to 13
**characterized by**
- combusting in the second HRSG or boiler (43) residue oxygen in the exhaust gas by means of supplementary firing.

15. Method according to one of the foregoing claims 10 to 14
**characterized by**
- combusting in the second HRSG or boiler (43) residue oxygen to maintain a constant CO2 concentration in the flue gas leaving the second HRSG or boiler (43), and
- controlling the power output of the plant by changing the ratio of flue gas mass flow directed to first HRSG or boiler (36) to the flue gas mass flow directed to the second HRSG or boiler (43).

## Patentansprüche

1. Kombikraftwerk (30) für die Erzeugung von elektrischer Energie, das mindestens eine Gasturbine (31-33), einen ersten oder einen Hauptdampfgenerator für die Wärmerückgewinnung HRSG (36) (heat recovery steam generator = HRSG), um Dampf mittels der Gase, die von der Gasturbine (33) ausströmen und über eine Abgasleitung (34) zu dem HRSG (36) gelenkt werden, zu erzeugen, und mindestens eine Dampfturbine (39), die von dem Dampf, der in dem ersten HRSG (36) erzeugt wird, angetrieben wird, umfasst, wobei das Kraftwerk betriebsmäßig mit einer CO2-Einfanganlage (48) verbunden ist, die für die Entfernung von CO2, das in dem Abgas der Gasturbine enthalten ist, mittels einer Absorptionslösung angeordnet und konfiguriert ist, wobei die Absorptionslösung erneut erwärmt werden kann, um reines gasförmiges CO2 freizusetzen, wobei
das Kraftwerk einen zweiten Dampfgenerator für die Wärmerückgewinnug HRSG oder einen Kessel (43) umfasst, der konfiguriert und angeordnet ist, um Abgas der Gasturbine aufzunehmen und um die Wärme von dem Abgas der Gasturbine an den Dampf und/oder an das Speisewasser zu übertragen, und wobei der zweite HRSG oder Kessel (43) konfiguriert und angeordnet ist, um Dampf für mindestens eine weitere Dampfturbine (60, 60', 70) oder für die CO2-Einfanganlage (48) oder für beides zu erzeugen,
**dadurch gekennzeichnet, dass**
das Kombikraftwerk (30) eine Drosselklappe oder einen Strömungsteiler (34') in einer Abgasleitung (34) der Gasturbine, die Abgas von der Gasturbine (33) zu dem ersten HRSG (36) leitet, umfasst oder eine Drosselklappe oder einen Strömungsteiler (37') in einer Abgasleitung (37), die von dem ersten HRSG (36) wegleitet, umfasst, wobei die Drosselklappe oder der Strömungsteiler (34', 37') angeordnet ist, um eine Abgasströmung in eine erste und eine zweite Teilabgasströmung aufzuteilen, wobei das Kraftwerk (30) Leitungen (35, 37, 42, 37") umfasst, um die erste Teilabgasströmung zu dem ersten HRSG (36) oder zu einem Schornstein (38) und die zweite Teilabgasströmung zu dem zweiten HRSG oder zu dem Kessel (43) zu lenken,
wobei die Drosselklappe oder der Strömungsteiler (34', 37') angeordnet ist, um 10 bis 60 % der Abgasströmung, die den Strömungsteiler oder die Drosselklappe (34', 37') erreicht, in die zweite Abgasströmung (42, 37") und zu dem zweiten HRSG oder zu dem Kessel (43) umzulenken.

2. Kombikraftwerk (30) nach Anspruch 1, **dadurch gekennzeichnet, dass**
die Drosselklappe oder der Strömungsteiler (34') in einer Abgasleitung (34), die von der Gasturbine (33) zu dem ersten HRSG (36) führt, angeordnet ist, und dass eine Leitung (35) angeordnet ist, um die erste Teilabgasströmung von dem Strömungsteiler (34') zu dem ersten HRSG (36) zu lenken, und dass eine weitere Leitung (42) angeordnet ist, um die zweite Teilabgasströmung von dem Strömungsteiler (34') zu dem zweiten HRSG oder zu dem Kessel (43) zu lenken.

3. Kombikraftwerk (30) nach Anspruch 1, **dadurch gekennzeichnet, dass**
die Drosselklappe oder der Strömungsteiler (37') in einer Abgasleitung angeordnet ist, die von dem ersten HRSG (36) wegleitet und zu dem Schornstein (38) hinleitet, und dass eine Leitung (37) angeordnet ist, um die erste Teilabgasströmung von dem Strömungsteiler (37') zu dem Schornstein (38) zu lenken, und dass eine weitere Leitung (37") angeordnet ist, um die zweite Teilabgasströmung von dem Strömungsteiler (37') zu dem zweiten HRSG oder zu dem Kessel (43) zu lenken.

4. Kombikraftwerk (30) nach einem der vorhergehenden Ansprüche, **dadurch gekennzeichnet, dass**
das Kraftwerk mindestens eine Leitung (49) umfasst, um den Dampf, der in dem zweiten HRSG oder in dem Kessel (43) erzeugt wird, zu der CO2-Einfanganlage (48) zu lenken.

5. Kombikraftwerk (30) nach einem der vorhergehenden Ansprüche, **dadurch gekennzeichnet, dass**
das Kraftwerk eine Leitung (62, 72) umfasst, um den Dampf, der in dem zweiten HRSG oder in dem Kessel (43) erzeugt wird, zu einer weiteren Dampfturbine (60, 60', 61, 70) zu lenken.

6. Kombikraftwerk (30) nach einem der vorhergehenden Ansprüche, **dadurch gekennzeichnet, dass**
das Kraftwerk eine ergänzende Feuerungsanlage (43') umfasst.

7. Kombikraftwerk (30) nach einem der vorhergehenden Ansprüche, **dadurch gekennzeichnet, dass**
das Kraftwerk ferner eine Leitung (46) für Gas, das von dem zweiten HRSG oder von dem Kessel (43) ausströmt, umfasst, die zu der CO2-Einfanganlage (48) führt.

8. Kombikraftwerk (30) nach einem der Ansprüche 5 bis 7, **dadurch gekennzeichnet, dass**
das Kraftwerk (30) eine Hoch- oder Zwischendruckdampfturbine (60, 60'), die von dem Dampf, der in dem zweiten HRSG oder in dem Kessel (43) erzeugt wird, angetrieben wird, und einen Generator (76) umfasst, der auf einer einzelnen Welle angeordnet ist, und dass das Kraftwerk (30) einen CO2-Kompressor (65, 66) umfasst, der auf der einzelnen Welle angeordnet ist.

9. Kombikraftwerk (30) nach Anspruch 5, 6 oder 7, **dadurch gekennzeichnet, dass**
das Kraftwerk (30) eine Dampfturbine (70) umfasst, die angeordnet ist, um von dem zweiten HRSG oder von dem Kessel (43) Dampf aufzunehmen und um einen Generator (76) anzutreiben, und dass das Kraftwerk (30) ferner Leitungen (73-75) umfasst, um Dampf von dem zweiten HRSG oder von dem Kessel (43) oder Dampf, der von der Dampfturbine (70) oder von beiden extrahiert worden ist, zu der CO2-Einfanganlage (48) zu lenken.

10. Verfahren, um ein Kombikraftwerk (30) zu betreiben, das eine Gasturbine (31-33), einen ersten Dampfgenerator für die Wärmerückgewinnug HRSG (36), eine Dampfturbine (39) und eine CO2-Einfanganlage (48) und eine Leitung (35), die das Abgas von der Gasturbine zu dem ersten Dampfgenerator für die Wärmerückgewinnug HRSG (36) leitet, umfasst,
wobei das Verfahren Folgendes umfasst:
- Lenken eines ersten Abschnitts der Abgasströmung von der Gasturbine (33) durch die Leitung (35), die das Abgas von der Gasturbine zu dem ersten Dampfgenerator für die Wärmerückgewinnug HRSG (36) leitet, zu einem Schornstein (38),
- Lenken eines zweiten Abschnitts einer Abgasströmung von der Gasturbine (33) durch die Leitung (35), die das Abgas von der Gasturbine (33) zu dem ersten Dampfgenerator für die Wärmerückgewinnug HRSG (36) leitet, zu einem zusätzlichen HRSG oder zu einem Kessel (43),
- Betreiben des zweiten HRSG oder des Kessels (43), um Dampf zu erzeugen und um diesen Dampf zu der CO2-Einfanganlage (48) oder zu einer weiteren Dampfturbine (60, 61, 60',70) oder zu beiden zu lenken.

11. Verfahren nach Anspruch 10, das durch Folgendes gekennzeichnet ist:
- Umlenken des zweiten Abschnitts der Abgasströmung von der Gasturbine (33) zu dem zweiten HRSG (43) mittels eines Strömungsteilers (34'), der in der Abgasleitung nach der Gasturbine (33) und vor dem ersten HRSG (36) angeordnet ist, oder durch
- Umlenken des zweiten Abschnitts der Abgasströmung von der Gasturbine (33) zu dem zweiten HRSG (43) mittels eines Strömungsteilers (37'), der in der Abgasleitung nach dem ersten HRSG (36) angeordnet ist.

12. Verfahren nach einem der vorhergehenden Ansprüche 10 bis 11, **gekennzeichnet durch**:
- Lenken von mindestens einem Abschnitt der Abgasströmung, die aus dem zweiten HRSG oder aus dem Kessel (43) austritt, zu der CO2-Einfanganlage (48).

13. Verfahren nach einem der vorhergehenden Ansprüche 10 bis 12, **gekennzeichnet durch**:
- Verwenden des Dampfes, der in dem zweiten HRSG oder in dem Kessel (43) erzeugt worden ist, um eine CO2-Absorptionslösung in der CO2-Einfanganlage (48) erneut zu erwärmen.

14. Verfahren nach einem der vorhergehenden Ansprüche 10 bis 13, **gekennzeichnet durch**:
- Verbrennen von Restsauerstoff in dem Abgas in dem zweiten HRSG oder in dem Kessel (43) mittels einer ergänzenden Feuerungsanlage.

15. Verfahren nach einem der vorhergehenden Ansprüche 10 bis 14, **gekennzeichnet durch**:
- Verbrennen von Restsauerstoff in dem zweiten HRSG oder in dem Kessel (43), um eine konstante CO2-Konzentration in dem Rauchgas, das den zweiten HRSG oder den Kessel (43) verlässt, aufrechtzuerhalten, und
- Steuern der Leistungsausgabe des Kraftwerks, indem das Verhältnis der Rauchgasmassenströmung, die zu dem ersten HRSG oder zu dem Kessel (36) gelenkt wird, zu der Rauchgasmassenströmung, die zu dem zweiten HRSG oder zu dem Kessel (43) gelenkt wird, verändert wird.

## Revendications

1. Centrale à cycle combiné (30) pour la génération de puissance électrique, comprenant au moins une turbine à gaz (31-33), un premier générateur de vapeur à récupération de chaleur, HRSG, ou HRSG principal, (36), pour générer de la vapeur au moyen de gaz d'échappement provenant de la turbine à gaz (33) et dirigé vers le HRSG (36) par le biais d'une conduite de gaz d'échappement (34), et au moins une turbine à vapeur (39) entraînée par la vapeur générée dans le premier HRSG (36), la centrale étant connectée fonctionnellement à une installation de capture de CO2 (48) agencée et configurée pour éliminer le CO2 contenu dans le gaz d'échappement de la turbine à gaz au moyen d'une solution d'absorption, la solution d'absorption pouvant être réchauffée afin de libérer du CO2 gazeux pur,
la centrale comprenant un deuxième générateur de vapeur à récupération de chaleur HRSG ou une chaudière (43) configuré(e) et agencé(e) de manière à recevoir le gaz d'échappement de la turbine à gaz et à transférer la chaleur provenant du gaz d'échappement de la turbine à gaz à la vapeur et/ou à l'eau d'alimentation, et le deuxième HRSG ou la chaudière (43) étant configuré(e) et agencé(e) de manière à générer de la vapeur pour au moins une turbine à vapeur supplémentaire (60, 60', 70) ou pour l'installation de capture de CO2 (48) ou les deux,
**caractérisée en ce que**
la centrale à cycle combiné (30) comprend un amortisseur ou un diviseur d'écoulement (34') dans une conduite de gaz d'échappement de turbine à gaz (34) conduisant le gaz d'échappement depuis la turbine à gaz (33) au premier HRSG (36) ou comprend un amortisseur ou un diviseur d'écoulement (37') dans une conduite de gaz d'échappement (37) conduisant à l'écart du premier HRSG (36), l'amortisseur ou le diviseur d'écoulement (34', 37') étant agencé de manière à diviser un écoulement de gaz d'échappement en un premier et un deuxième écoulement de gaz d'échappement partiel, la centrale (30) comprenant des conduites (35, 37, 42, 37'') pour diriger le premier écoulement de gaz d'échappement partiel vers le premier HRSG (36) ou vers une cheminée (38) et le deuxième écoulement de gaz d'échappement partiel vers le deuxième HRSG ou la chaudière (43),
l'amortisseur ou le diviseur d'écoulement (34', 37') étant agencé de manière à dévier 10 à 60 % de l'écoulement de gaz d'échappement atteignant le diviseur d'écoulement ou l'amortisseur (34', 37') dans le deuxième écoulement de gaz d'échappement (42, 37'') et vers le deuxième HRSG ou la chaudière (43).

2. Centrale à cycle combiné (30) selon la revendication 1,
**caractérisée en ce que**
l'amortisseur ou le diviseur d'écoulement (34') est agencé dans une conduite de gaz d'échappement (34) conduisant depuis la turbine à gaz (33) jusqu'au premier HRSG (36) et une conduite (35) est disposée de manière à diriger le premier écoulement de gaz d'échappement partiel depuis le diviseur d'écoulement (34') jusqu'au premier HRSG (36) et une conduite supplémentaire (42) est agencée de manière à diriger le deuxième écoulement de gaz d'échappement partiel depuis le diviseur d'écoulement (34') jusqu'au deuxième HRSG ou à la chaudière (43).

3. Centrale à cycle combiné (30) selon la revendication 1,
**caractérisée en ce que**
l'amortisseur ou le diviseur d'écoulement (37') est agencé dans une conduite de gaz d'échappement conduisant à l'écart du premier HRSG (36) et jusqu'à la cheminée (38) et une conduite (37) est agencée de manière à diriger le premier écoulement de gaz d'échappement partiel depuis le diviseur d'écoulement (37') jusqu'à la cheminée (38) et une conduite supplémentaire (37'') est agencée de manière à diriger le deuxième écoulement de gaz d'échappement partiel depuis le diviseur d'écoulement (37') jusqu'au deuxième HRSG ou à la chaudière (43).

4. Centrale à cycle combiné (30) selon l'une quelconque des revendications précédentes,
**caractérisée en ce que**
la centrale comprend au moins une conduite (49) pour diriger la vapeur générée dans le deuxième HRSG ou la chaudière (43) jusqu'à l'installation de capture de CO2 (48).

5. Centrale à cycle combiné (30) selon l'une quelconque des revendications précédentes,
**caractérisée en ce que**
la centrale comprend une conduite (62, 72) pour diriger la vapeur générée dans le deuxième HRSG ou la chaudière (43) vers une turbine à vapeur supplémentaire (60, 60', 61, 70).

6. Centrale à cycle combiné (30) selon l'une quelconque des revendications précédentes,
**caractérisée en ce que**
la centrale comprend un ensemble d'allumage supplémentaire (43').

7. Centrale à cycle combiné (30) selon l'une quelconque des revendications précédentes,
**caractérisée en ce que**
la centrale comprend en outre une conduite (46) pour le gaz d'échappement provenant du deuxième HRSG ou de la chaudière (43) conduisant à l'installation de capture de CO2 (48).

8. Centrale à cycle combiné (30) selon l'une quelconque des revendications 5 à 7,
**caractérisée en ce que**
la centrale (30) comprend une turbine à vapeur à haute pression ou à pression intermédiaire (60, 60') entraînée par la vapeur générée dans le deuxième HRSG ou dans la chaudière (43) et un générateur (76) agencé sur un arbre unique et **en ce que** la centrale (30) comprend un compresseur de CO2 (65, 66) agencé sur l'arbre unique.

9. Centrale à cycle combiné (30) selon la revendication 5, 6 ou 7,
**caractérisée en ce que**
la centrale (30) comprend une turbine à vapeur (70) agencée de manière à recevoir de la vapeur depuis le deuxième HRSG ou la chaudière (43) et pour entraîner un générateur (76) et la centrale (30) comprend en outre des conduites (73-75) pour diriger la vapeur depuis le deuxième HRSG ou la chaudière (43) ou la vapeur extraite de ladite turbine à vapeur (70) ou des deux vers l'installation de capture de CO2 (48).

10. Procédé pour faire fonctionner une centrale à cycle combiné (30) comprenant une turbine à gaz (31-33), un premier générateur de vapeur à récupération de chaleur HRSG (36), une turbine à vapeur (39), et une installation de capture de CO2 (48) et une conduite (35) conduisant le gaz d'échappement provenant de la turbine à gaz jusqu'au premier générateur de vapeur à récupération de chaleur HRSG (36),
comprenant
- diriger une première portion de l'écoulement de gaz d'échappement provenant de la turbine à gaz (33) à travers la conduite (35) conduisant les gaz d'échappement depuis la turbine à gaz jusqu'au premier générateur de vapeur à récupération de chaleur HRSG (36) jusqu'à une cheminée (38),
- diriger une deuxième portion d'un écoulement de gaz d'échappement provenant de la turbine à gaz (33) à travers la conduite (35) conduisant les gaz d'échappement depuis la turbine à gaz (33) jusqu'au premier générateur de vapeur à récupération de chaleur HRSG (36) jusqu'à un deuxième HRSG additionnel ou une chaudière (43),
- faire fonctionner le deuxième HRSG ou la chaudière (43) pour générer de la vapeur et diriger cette vapeur vers l'installation de capture de CO2 (48) ou vers une turbine à vapeur supplémentaire (60, 61, 60', 70) ou les deux.

11. Procédé selon la revendication 10,
**caractérisé par**
- le fait de dévier la deuxième portion de l'écoulement de gaz d'échappement provenant de la turbine à gaz (33) vers le deuxième HRSG (43) au moyen d'un diviseur d'écoulement (34') agencé dans la conduite de gaz d'échappement après la turbine à gaz (33) et avant le premier HRSG (36)
ou par
- le fait de dévier la deuxième portion de l'écoulement de gaz d'échappement provenant de la turbine à gaz (33) vers le deuxième HRSG (43) au moyen du diviseur d'écoulement (37') agencé dans la conduite de gaz d'échappement après le premier HRSG (36).

12. Procédé selon l'une quelconque des revendications précédentes 10 à 11,
**caractérisé par**
- le fait de diriger au moins une portion de l'écoulement de gaz d'échappement sortant du deuxième HRSG ou de la chaudière (43) vers l'installation de capture de CO2 (48).

13. Procédé selon l'une quelconque des revendications précédentes 10 à 12,
**caractérisé par**
- le fait d'utiliser la vapeur générée dans le deuxième HRSG ou dans la chaudière (43) pour réchauffer une solution d'absorption de CO2 dans l'installation de capture de CO2 (48).

14. Procédé selon l'une quelconque des revendications précédentes 10 à 13,
**caractérisé par**
- le fait de brûler dans le deuxième HRSG ou dans la chaudière (43) l'oxygène résiduel dans le gaz d'échappement au moyen d'un allumage supplémentaire.

15. Procédé selon l'une quelconque des revendications précédentes 10 à 14,
**caractérisé par**
- le fait de brûler dans le deuxième HRSG ou dans la chaudière (43) l'oxygène résiduel pour maintenir une concentration constante en CO2 dans les gaz de fumée sortant du deuxième HRSG ou de la chaudière (43), et
- le fait de contrôler la puissance fournie par la centrale en changeant le rapport du débit massique de gaz de fumée dirigé vers le premier HRSG ou la chaudière (36) au débit massique de gaz de fumée dirigé vers le deuxième HSGR ou la chaudière (43).
